# EUROPÄISCHE PATENTSCHRIFT

(11) **EP 2 731 631 B1**
(45) Veröffentlichungstag und Bekanntmachung des Hinweises auf die Patenterteilung: **30.05.2018**
(21) Anmeldenummer: 12733453.0
(22) Anmeldetag: 28.06.2012
(51) Int. Cl.: A61L 2/08, B67C 7/00, A61L 2/18, B29C 49/46, B29C 49/64, B65B 55/08, B65B 55/10, A61L 2/10, A61L 2/12, B65B 3/02, B29C 49/06, B65B 47/02, B67C 3/22

(54) **VERFAHREN UND VORRICHTUNG ZUM HERSTELLEN VON MIT FLÜSSIGKEITEN GEFÜLLTEN GETRÄNKEBEHÄLTNISSEN**
METHOD AND DEVICE FOR PRODUCING BEVERAGE CONTAINERS FILLED WITH LIQUIDS
PROCÉDÉ ET DISPOSITIF DE PRODUCTION DE RÉCIPIENTS POUR BOISSONS REMPLIS DE LIQUIDES

(30) Priorität: 15.07.2011 DE 102011107772
(43) Veröffentlichungstag der Anmeldung: 21.05.2014
(73) Patentinhaber: Krones AG, 93073 Neutraubling (DE)
(72) Erfinder: KNOTT, Josef, 93073 Neutraubling (DE); SCHEUREN, Hans, 93073 Neutraubling (DE)
(74) Vertreter: Bittner, Bernhard
(86) Internationale Anmeldenummer: PCT/EP2012/062627
(87) Internationale Veröffentlichungsnummer: WO 2013/010772

(56) Entgegenhaltungen:
- EP-A1- 1 982 920
- EP-A1- 2 420 258
- WO-A1-2008/111893
- DE-A1-102008 057 403
- JP-A- 2006 111 295

## Beschreibung

Die vorliegende Erfindung bezieht sich auf eine Vorrichtung und ein Verfahren zum Herstellen von mit Flüssigkeit insbesondere mit einem Getränk gefüllten Getränkebehältnissen. Derartige Verfahren sind aus dem Stand der Technik seit längerem bekannt. So sind beispielsweise Vorrichtungen und Verfahren bekannt, bei denen zunächst eine Blasstation bzw. eine Umformungseinrichtung aus Kunststoffvorformlingen Kunststoffbehältnisse herstellt und anschließend diese Behältnisse mit einer Flüssigkeit wie bspw. einem Getränk befüllt werden.

Die EP 21 38 298 A2 beschreibt eine Vorrichtung und ein Verfahren zum Herstellen von Kunststoffbehältnissen. Dabei werden die Kunststoffvorformlinge zunächst mit einer ersten Sterilisationseinrichtung sterilisiert, anschließend erwärmt und umgeformt und nach ihrer Umformung als Kunststoffbehältnisse mit einer zweiten Sterilisationseinrichtung sterilisiert. In diesem Falle dienen die beiden Sterilisationseinrichtungen dazu, um effektiv eine Gesamtsterilisation der Behältnisse zu bewirken. Allerdings erfordert diese Vorrichtung ein Gehäuse bzw. einen Reinraum, der die gesamte Vorrichtung einschließlich des Ofens, der Umformungsstationen sowie auch der Fülleinrichtungen umgibt. Es ist dabei relativ aufwendig, die sterilen Bedingungen innerhalb eines derartigen großen Reinraums aufrecht zu erhalten.

Aus der WO 2010/ 020530 A1 ist eine Vorrichtung und ein Verfahren zum Sterilisieren von Kunststoffvorformlingen bekannt. Dabei ist vorgesehen, dass bereits nach dem Ende eines Erwärmungsvorgangs der Kunststoffvorformlinge und vor dem Ende des Umformungsvorgangs in der Umformungseinrichtung die Sterilisation der Behältnisse mittels eines fließfähigen Mediums bspw. H₂O₂, Peressigsäure oder ClO₂ stattfindet. Bei dieser Vorrichtung tritt jedoch das Risiko auf, dass es zu einer Rekontamination der Kunststoffvorformlinge kommen kann.

Die EP 1 98 2 920 A1 beschreibt eine Vorrichtung zum Sterilisieren von Behältnissen. Dabei werden Behandlungsköpfe durch eine Mündung des Behältnisses in dieses geführt und die Innenwandung der Behältnisse wird mit Elektronenstrahlung behandelt um diese Innenoberfläche zu sterilisieren. Der Offenbarungsgehalt der EP 1 98 2 920 A1 wird hiermit zur Bezugnahme vollständig auch zum Offenbarungsgehalt der vorliegenden Anmeldung gemacht.

Die DE 10 2008 057403 A1 zeigt ein Verfahren zum Herstellen von Kunststoffbehältnissen, wobei Kunststoffverschlüsse aus einem Kunststoffmaterial hergestellt und während dieses Herstellungsprozesses erwärmt werden.

Der vorliegenden Erfindung liegt daher die Aufgabe zugrunde, die Sterilisation derartiger Behältnisse zu vereinfachen. Auf diese Weise soll eine Effizienzsteigerung bestehender und zukünftiger Aseptik - Anlagen erreicht werden. Diese Aufgaben werden durch ein Verfahren und eine Vorrichtung nach den unabhängigen Patentansprüchen gelöst. Vorteilhafte Ausführungsformen und Weiterbildungen sind Gegenstand der Unteransprüche.

Bei einem erfindungsgemäßen Verfahren zum Herstellen von mit Flüssigkeiten und insbesondere mit Getränken gefüllten Behältnissen werden Kunststoffvorformlinge mit einer Erwärmungseinrichtung erwärmt, anschließend zu einer Umformungseinrichtung transportiert und von dieser Umformungseinrichtung zu den Kunststoffbehältnissen umgeformt. Anschließend werden die Kunststoffbehältnisse zu einer Fülleinrichtung transportiert und mit der Flüssigkeit gefüllt. Dabei werden die Behältnisse wenigstens während des Befüllens innerhalb eines Reinraums transportiert und zumindest teilweise vor dem Befüllen mit der Flüssigkeit innerhalb des Reinraums von einer ersten Sterilisationseinrichtung sterilisiert.

Erfindungsgemäß werden die Kunststoffvorformlinge vor dem Sterilisieren mit der ersten Sterilisationseinrichtung mittels einer zweiten Sterilisationseinrichtung vorsterilisiert, wobei diese Vorsterilisierung außerhalb des Reinraums vorgenommen wird.

Es wird daher vorgeschlagen, dass eine Vorsterilisierung der Behältnisse außerhalb des Reinraums vorgenommen wird. Daher wird vorteilhaft diese Vorsterilisierung unter nicht sterilen Umgebungsbedingungen vorgenommen Auf den ersten Blick erscheint es zwar nicht logisch, eine Sterilisation unter unsterilen Bedingungen durchzuführen, da mit einer gewissen Rekontamination der Behältnisse zu rechnen ist. Allerdings wird erfindungsgemäß vorgeschlagen, dass es sich bei dieser Vorsterilisation um einen Prozess handelt, der lediglich ein gewisses Reinheitsniveau der Kunststoffbehältnisse erreicht. Auf diese Weise kann die später stattfindende Sterilisation mit einem geringeren Aufwand betrieben werden, da der Reinheitsgrad der Behältnisse bereits höher ist als wenn diese nicht vorsterilisiert worden wären
Dabei werden die Behältnisse bevorzugt nach dem Umformen von der ersten Sterilisationseinrichtung sterilisiert. Vorteilhaft werden daher die Behältnisse bereits während des Umformungsprozesses innerhalb des Reinraums sterilisiert. Erfindungsgemäß erfolgt die Vorsterilisierung mit der zweiten Sterilisationseinrichtung nach dem Erwärmen mit der Erwärmungseinrichtung. Damit werden die Kunststoffvorformlinge vorteilhaft während des Erwärmens außerhalb des Reinraums transportiert. Erfindungsgemäß erfolgt die Vorsterilisierung in der Weise, dass eine Innenwandung der Kunststoffvorformlinge mit Strahlung und oder Ladungsträgern beaufschlagt wird.
Es wird also im Rahmen der Erfindung vorgeschlagen, eine aseptische Sterilisationseinheit, insbesondere eine chemisch arbeitende Sterilisationseinheit um eine physikalisch arbeitende Sterilisationseinheit zu ergänzen. Es ist hierbei möglich die Innenwandung der Behältnisse mit Strahlung wie UV-Strahlung oder Laser-Strahlung, Röntgenstrahlung oder dergleichen zu beaufschlagen. Bevorzugt wird jedoch die Innenwandung der Behältnisse mit Elektronenstrahlung bzw. Elektronen beaufschlagt. Damit wird vorteilhaft der Einsatz von Elektronenstrahlen zur Innenbehandlung der Kunststoffvorformlinge vorgesehen. Dies erfolgt außerhalb des Reinraums. Durch die erfindungsgemäße Vorgehensweise ist es daher möglich, den Reinraum kleiner zu gestalten, was sich unmittelbar auch auf den Aufwand zur Aufrechterhaltung steriler Bedingungen auswirkt.

Ein entsprechendes Aggregat zur Bestrahlung der Kunststoffbehältnisse reduziert durch Bestrahlung der Behältnisinnenseite die Keimbelastung dergestalt, dass bspw. nur eine von einer Millionen Preforms (log6) keimbelastet ist. Diese halbfertigen Behälter werden in der sich anschließenden Blasmaschine umgeformt bzw. aufgeblasen. Durch diesen Prozess sowie die möglicherweise in diesem Abschnitt noch nicht vorhandene Aseptik erfolgt eine Wiederverkeimung sodass anschließend wieder eine von 1000 Preforms (-log3) keimbelastet ist. Im Anschluss erfolgt die eigentliche Sterilisation durch Einsatz chemischer Mittel mit einer Keimreduzierung von log4. Schließlich werden die so gefertigten Behältnisse mit einer Flüssigkeit bspw. einem low-acid Produkt befüllt.
Vorteilhaft werden die Kunststoffbehältnisse mittels der ersten Sterilisationseinrichtung durch Beaufschlagung mit einem fließfähigen Sterilisationsmedium sterilisiert. Als Sterilisationsmedium kommt dabei bspw. Peressigsäure oder Wasserstoffperoxid (H₂O₂) infrage.
Es erfolgt damit eine definierte Verknüpfung von chemischer und physikalischer Sterilisation. Wie erwähnt, ist es möglich, dass zunächst eine Sterilisation durch Beaufschlagung mit Strahlung und/oder Ladungsträgern erfolgt und diese außerhalb des Reinraums erfolgt und sich dann im Inneren des Reinraums eine chemische Sterilisation anschließt. Neben oder anstelle einer Bestrahlung mit Ladungsträgern könnte hier auch eine Bestrahlung mittels UV - Licht vorgesehen sein. Es findet eine definierte Verknüpfung von aseptischer und septischer Sterilisation statt, wobei insbesondere die Beaufschlagung mit dem Sterilisationsmedium unter aseptischen Bedingungen innerhalb eines Reinraums erfolgt. Insgesamt wird durch die vorgeschlagene Vorgehensweise eine erhöhte Prozesssicherheit erreicht, da im Wesentlichen jeder Keim abgetötet werden kann. Auch ist zur Vorrichtung eine Verringerung des Einsatzes von chemischen Mitteln möglich, da bereits bestrahlte Kunststoffbehältnisse weniger Sterilisationseinsatz benötigen. Daneben kann so auch eine Leistungserhöhung der aseptischen Sterilisationseinheit erreicht werden, da neben dem verringerten Einsatz von chemischen Mitteln auch die Behandlungszeit in der aseptischen Sterilisationseinheit reduziert werden kann. Es wird daher besonders Bevorzugt eine Kombination von einer chemischen Sterilisierung mit einer physikalischen Sterilisationseinheit, die bspw. die Kunststoffbehältnisse mit Strahlung oder Ladungsträgern beaufschlagt, vorgeschlagen. Die zweite Sterilisationseinrichtung, welche die Kunststoffbehältnisse durch Beaufschlagung mit Strahlung und/oder Ladungsträgern sterilisiert, ist in der Transportrichtung der Behältnisse vor der ersten Sterilisationseinrichtung angeordnet.
Bei einem weiteren vorteilhaften Verfahren werden die Kunststoffvorformlinge vor und/oder während des Umformungsvorgangs mit der zweiten Sterilisationseinrichtung vorsterilisiert. Bei dieser Vorgehensweise werden also bereits die Kunststoffvorformlinge sterilisiert, was insoweit vorteilhaft sein kann, als diese eine wesentlich geringere Oberfläche aufweisen als die anschließend hieraus umgeformten Kunststoffbehältnisse. Allerdings wäre es auch möglich, dass die Vorsterilisierung, im Folgenden auch als physikalische Behandlung bezeichnet, direkt vor der nachfolgenden chemischen Behandlung nach dem eigentlichen Umformungsvorgang erfolgt. Daneben wäre es denkbar, dass eine Bestrahlung der Kunststoffvorformlinge auch vor einer chemischen Behandlung vor einer sterilen Blasmaschine erfolgen könnte. Dies bedeutet, dass es auch möglich wäre, zunächst die Kunststoffvorformlinge durch Bestrahlung vorzusterilisieren und direkt im Anschluss durch Beaufschlagung mit dem fließfähigen Medium zu sterilisieren und erst anschließend mit der Umformungseinrichtung umzuformen.
Bei einem weiteren vorteilhaften Verfahren wird mittels der zweiten Sterilisationseinrichtung ausschließlich eine Innenwandung der Kunststoffvorformlinge sterilisiert. Dies kann beispielsweise dadurch erfolgen, dass Strahlfinger in das Innere der Kunststoffvorformlinge oder Kunststoffbehältnisse eintauchen und entsprechend die Innenwandung mit Strahlung und/oder Strahlungsträgern beaufschlagen. Daneben kann jedoch auch ein Mündungsbereich der Kunststoffvorformlinge mittels einer zweiten Sterilisationseinrichtung sterilisiert werden.
Bei einem weiteren vorteilhaften Verfahren werden die Kunststoffbehältnisse wenigstens abschnittsweise innerhalb eines Reinraums transportiert, wobei die Kunststoffvorformlinge zumindest während ihrer Erwärmung noch außerhalb des Reinraums transportiert werden. Es wird daher vorgeschlagen, im Vergleich zum Stand der Technik den Reinraum kleiner zu gestalten und insbesondere die Erwärmung der Kunststoffvorformlinge noch vor dem Reinraum vorzunehmen. Die Sterilisation mit der zweiten Sterilisationseinrichtung findet außerhalb des Reinraums statt, wohingegen die Sterilisation mit der ersten Sterilisationseinrichtung innerhalb des besagten Reinraums erfolgt. Dabei ist es möglich, dass bereits der Umformungsvorgang der Kunststoffvorformlinge zu den Kunststoffbehältnissen innerhalb eines Reinraums stattfindet.
Die vorliegende Erfindung ist weiterhin auf eine Vorrichtung zum Herstellen von mit Flüssigkeit befüllten Behältnissen gerichtet, wobei diese Vorrichtung eine Erwärmungseinrichtung aufweist, welche Kunststoffvorformlinge erwärmt, sowie eine in einer Transportrichtung der Kunststoffvorformlinge nach der besagten Erwärmungseinrichtung angeordnete Umformungseinrichtung, welche die Kunststoffvorformlinge zu Kunststoffbehältnissen umformt. Weiterhin weist die Vorrichtung eine in einer Transportrichtung der Kunststoffbehältnisse nach der Umformungseinrichtung angeordnete Fülleinrichtung auf, welche die Behältnisse mit einer Flüssigkeit und insbesondere mit einem Getränk befüllt. Weiterhin weist die Vorrichtung einen Reinraum auf, in dem die Behältnisse zumindest teilweise behandelt und insbesondere befüllt werden. Daneben ist eine wenigstens teilweise vor der Fülleinrichtung und innerhalb des Reinraums angeordnete erste Sterilisationseinrichtung vorgesehen, welche die Kunststoffbehältnisse sterilisiert.
Erfindungsgemäß weist die Vorrichtung eine zweite Sterilisationseinrichtung auf, welche die Kunststoffvorformlinge vorsterilisiert, wobei diese zweite Sterilisationseinrichtung außerhalb des Reinraums angeordnet ist.
Es wird daher auch vorrichtungsseitig vorgeschlagen, dass eine Vorsterilisierung der Behältnisse außerhalb des Reinraums vorgenommen wird. Die zweite Sterilisationseinrichtung ist in der Transportrichtung der Behältnisse vor dem Reinraum angeordnet. Erfindungsgemäß ist diese zweite Sterilisationseinrichtung in der Transportrichtung der Behältnisse nach der Erwärmungseinrichtung angeordnet. Die zweite Sterilisationseinrichtung ist in der Transportrichtung der Kunststoffbehältnisse stromaufwärts bezüglich der Umformungseinrichtung angeordnet. Bei einer vorteilhaften Ausgestaltung ist die erste Sterilisationseinrichtung zwischen der Umformungseinrichtung und der Fülleinrichtung vorgesehen. Es wäre jedoch auch denkbar, dass die erste Sterilisationseinrichtung noch vor der Umformungseinrichtung angeordnet ist. Bevorzugt ist die erste Sterilisationseinrichtung insgesamt vor der Fülleinrichtung angeordnet.
Vorteilhaft handelt es sich bei der Umformungseinrichtung um eine Blasmaschine und insbesondere eine Streckblasmaschine. Das heißt, diese Umformungseinrichtung weist vorteilhaft eine Vielzahl von Blasstationen auf, die an einem beweglichen Träger und insbesondere an einem drehbaren Trägerrad angeordnet sind. Weiterhin weisen diese einzelnen Blasstationen vorteilhaft auch Reckstangen auf, welche die Kunststoffbehältnisse in ihrer Längsrichtung dehnen. Die Erwärmungseinrichtung kann dabei als Infrarotofen ausgestaltet sein, in welchem die Kunststoffvorformlinge während ihres Transports erwärmt werden. Es wäre jedoch auch möglich, dass es sich bei der Erwärmung um eine Mikrowellenerwärmungseinrichtung handelt, die besonders bevorzugt eine Vielzahl von Erwärmungseinheiten aufweist, in denen die Kunststoffvorformlinge durch Beaufschlagung mit Mikrowellen erwärmt werden.
Bei einer weiteren vorteilhaften Ausführungsform weist auch die Fülleinrichtung eine Vielzahl von Füllelementen auf, die an einem beweglichen Träger und insbesondere an einem drehbaren Füllrad angeordnet sind. Vorteilhaft weist die Vorrichtung weiterhin einen Reinraum auf, der zumindest Bestandteile der Vorrichtung, wie beispielsweise die Fülleinrichtung, umgibt. Vorteilhaft umgibt dieser Reinraum auch abschnittsweise den Transportpfad, auf dem die Kunststoffvorformlinge während des Umformungsvorgangs transportiert werden.
Vorteilhaft umgibt der Reinraum diesen Transportpfad kanalartig. Damit weist die Vorrichtung eine Transporteinrichtung zum Transportieren der Kunststoffbehältnisse auf.

Erfindungsgemäß weist die zweite Sterilisationseinrichtung eine Beaufschlagungseinrichtung auf, welche zumindest eine Innenwandung der Kunststoffvorformlinge mit Ladungsträgern und/oder magnetischer Strahlung beaufschlagt. Vorteilhaft weist weiterhin die zweite Sterilisationseinrichtung einen bewegbaren Träger auf, an dem eine Vielzahl von Beaufschlagungseinrichtungen angeordnet ist, welche zumindest eine Innenwandung der Kunststoffvorformlinge mit Ladungsträgern und/oder elektrischer Strahlung beaufschlagen. Vorteilhaft handelt es sich dabei um einen drehbaren Träger.

Bei einer weiteren vorteilhaften Ausführungsform ist die genannte Beaufschlagungseinrichtung gegenüber den Kunststoffvorformlingen bzw. den Kunststoffbehältnissen in einer von dem Transportpfad der Kunststoffvorformlinge abweichenden Richtung beweglich. Dabei ist es möglich, dass die Beaufschlagungseinrichtung selbst in die genannte Richtung bewegt wird, vorteilhaft werden jedoch zur Erreichung dieser Relativbewegung die Kunststoffvorformlinge bewegt und die Beaufschlagungseinrichtungen zumindest in dieser Bewegungsrichtung stationär gehalten. Vorteilhaft handelt es sich bei der besagten Richtung um eine zu dem Transportpfad senkrecht verlaufende Richtung.

Bei einer weiteren vorteilhaften Ausführungsform ist wenigstens eine Beaufschlagungseinrichtung wenigstens abschnittsweise durch eine Mündung der Kunststoffvorformlinge in diese einführbar.

Weitere vorteilhafte Ausführungsformen ergeben sich aus den beigefügten Zeichnungen:
Darin zeigen:
- Fig. 1: eine schematische Darstellung einer erfindungsgemäßen Vorrichtung;
- Fig. 2: eine Draufsicht auf eine zweite Sterilisationseinrichtung;
- Fig. 3: eine weitere Ansicht einer zweiten Sterilisationseinrichtung; und
- Fig. 4: eine Darstellung zur Veranschaulichung der Behältnissterilisation.

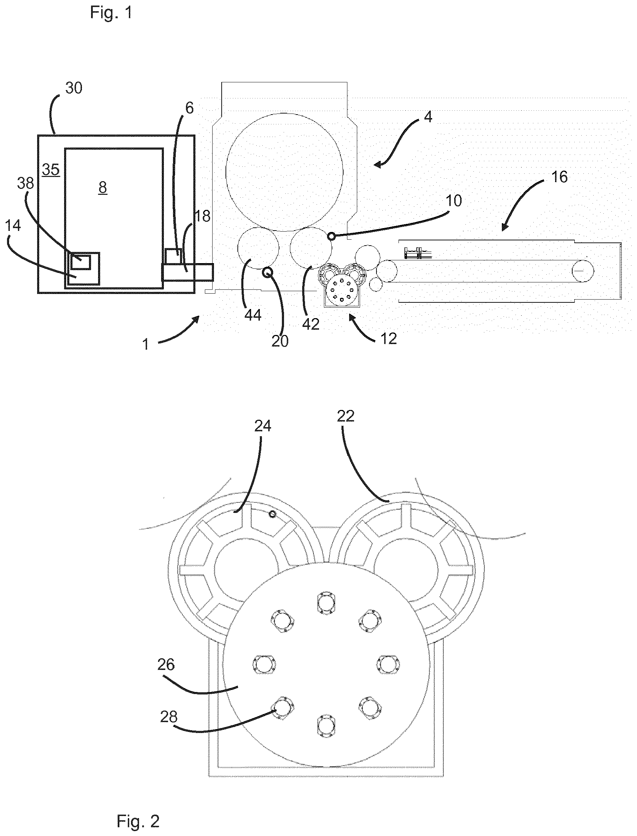

Fig. 1 zeigt eine schematische Darstellung einer Vorrichtung zum Behandeln von Behältnissen. Dabei werden Kunststoffvorformlinge 10 zunächst in einer Heizeinrichtung 16 erwärmt und anschließend von einer Umformungseinrichtung 4 zu Kunststoffbehältnissen 20 umgeformt. Anschließend werden diese Kunststoffbehältnisse 20 mittels einer Transporteinrichtung 18 zu einer Fülleinrichtung 8 transportiert und dort mit einer Flüssigkeit und insbesondere einem Getränk befüllt. Das Bezugszeichen 6 zeigt schematisch eine erste Sterilisationseinrichtung, welche die Behältnisse, die jedoch noch nicht gefüllt sind, sterilisiert. Diese Sterilisierung kann dabei insbesondere durch Beaufschlagung mit einem Sterilisationsmedium, das heißt in chemischer Weise, erfolgen.

Das Bezugszeichen 30 bezieht sich auf ein Gehäuse, welches zumindest die Fülleinrichtung 8 und die erste Sterilisationseinrichtung 6 umgibt. Im Inneren dieses Gehäuses 30 wird ein Reinraum 35 ausgebildet. Damit erfolgt die Sterilisierung mit der ersten Sterilisationseinrichtung 6 bereits unter sterilen bzw. aseptischen Bedingungen. Auch der Füllvorgang 8 findet unter aseptischen Bedingungen statt.

Das Bezugszeichen 14 bezieht sich auf eine (nur schematisch) dargestellte Verschließereinrichtung, welche die Behältnisse mit Verschlüssen verschließt. Auch die Verschließeinrichtung kann dabei noch in dem Reinraum 35 angeordnet sein. Dabei kann eine dritte Sterilisationseinrichtung 38 vorgesehen sein, welche die Behältnisverschlüsse sterilisiert (insbesondere unter aseptischen Bedingungen d.h. insbesondere innerhalb eines Reinraums).

Das Bezugszeichen 42 bezieht sich auf ein Zuführrad, welches der Umformungseinrichtung 4 die Kunststoffvorformlinge zuführt und das Bezugszeichen 44 um ein Abführrad bzw. einen Auslaufstern, der die Kunststoffbehältnisse 20 abführt. Das Bezugszeichen 12 kennzeichnet die zweite Sterilisationseinrichtung, welche die Kunststoffvorformlinge vor deren Einlauf in die Umformungseinrichtung 4 sterilisiert. Diese zweite Sterilisationseinrichtung sterilisiert dabei bevorzugt die Kunststoffvorformlinge in physikalischer Weise, das heißt durch Beaufschlagung mit Strahlung und/oder (bevorzugt) Ladungsträgern. Diese zweite Sterilisationseinrichtung ist außerhalb des Reinraums 35 angeordnet. Auf diese Weise kann der Reinraum vergleichsweise klein ausgelegt werden. Bei der hier gezeigten Ausführungsform findet der Umformungsvorgang noch außerhalb des Reinraums statt.

Es wäre jedoch auch möglich und bevorzugt, dass bereits der Umformungsvorgang unter sterilen Bedingungen stattfindet bzw. sich die Umformungseinrichtung 4 zumindest teilweise innerhalb des Reinraums befindet. Dabei ist es möglich, dass zumindest die einzelnen Umformungsstationen der Umformungseinrichtung innerhalb des Reinraums angeordnet bzw. innerhalb des Reinraums transportiert werden. Auch wäre es möglich, dass mehrere Reinräume vorgesehen sind, die beispielsweise untereinander mittels Schleusen oder dergleichen verbunden sind.

Die hier vorgeschlagene Verwendung einer rein physikalisch sterilisierenden Einheit bringt im Vergleich mehrere Vorteile mit sich. Einerseits können Keime, die durch chemische Mittel nicht abgetötet werden, durch die besagte Strahlung bzw. die Elektronenstrahlung abgetötet werden. Daneben ist es auch möglich, dass trotz des zusätzlichen Aggregats, bzw. der zweiten Sterilisationseinrichtung 12 die Anlagenleistung in der Gesamtheit nicht verringert wird. Daneben ist die vorgeschlagene Sterilisationseinrichtung 12 auch in der Herstellung und im Unterhalt relativ kostengünstig und die Sterilisationswirkung beruht letztlich auf elektrischem Strom.

Auf diese Weise kann auch der Chemieeinsatz, der nachfolgenden aseptischen Sterilisationseinheit 6 verringert werden. Weiterhin ist es so möglich, die Prozesszeiten und damit auch die Größe des Sterilisators bzw. Reinraums 35 zu verringern. Daneben können auch etwaige Geruchbildungen oder Verfärbungen durch den Einsatz von Ladungsträgern durch die nachfolgenden Bearbeitungsschritte aufgefangen werden. Auf diese Weise wird durch die Ergänzung einer klassischen chemischen Sterilisationsvorrichtung 6 durch ein physikalisches Entkeimungsverfahren eine Verbesserung derartiger Sterilisationsprozesse erreicht. Vorteilhaft arbeitet dabei die zweite Sterilisationseinrichtung 12 nicht aseptisch, wobei, wie oben erwähnt, gerade durch die Kombination der beiden Verfahren, das heißt der chemischen und der physikalischen Sterilisierung, die oben dargelegten Vorteile erreicht.

Die Fig. 2 zeigt eine Draufsicht auf eine zweite Sterilisationseinheit 12. Diese weist dabei ebenfalls ein Zuführrad 22 auf, welches die Kunststoffvorformlinge zuführt sowie ein Abführrad 24, welches die vorsterilisierten Kunststoffvorformlinge abführt. An einem beweglichen und insbesondere drehbaren Träger 26 ist eine Vielzahl von Beaufschlagungseinrichtungen 28 angeordnet, beispielsweise die oben erwähnten Strahlfinger, die in das Innere der Behältnisse eintauchen. So ist es bevorzugt möglich, dass die zweite Sterilisationseinrichtung 12 zwischen vier und zwölf, bevorzugt zwischen sechs und zehn Beaufschlagungseinrichtungen 28 für die Innenbehandlung der Behältnisse aufweist. Der drehbare Träger 26 kann hier einen Teilkreis mit einem Durchmesser zwischen 400 mm und 600 mm, bevorzugt zwischen 500 mm und 550 mm je nach Leistung aufweisen.

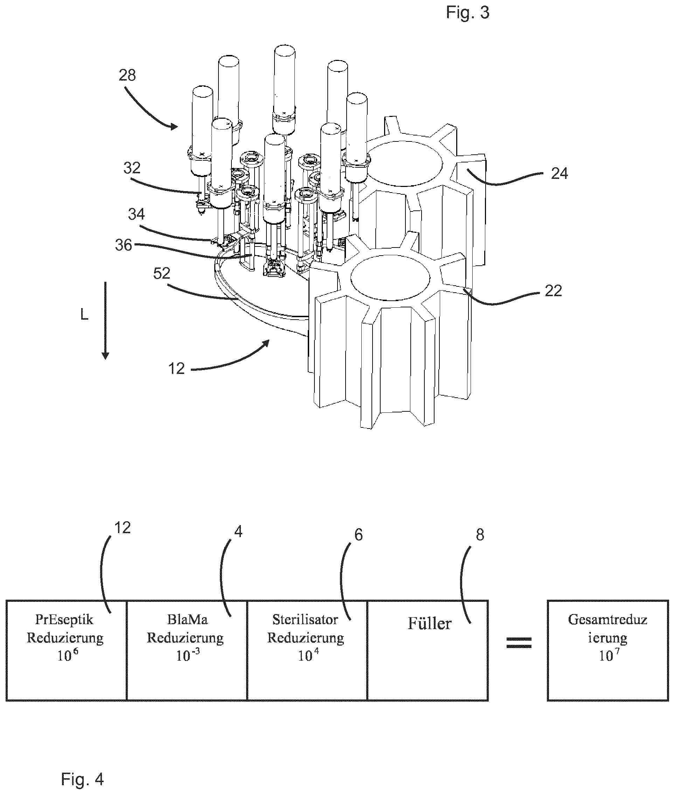

Fig. 3 zeigt eine weitere Darstellung einer zweiten Sterilisationseinrichtung 12. Die Beaufschlagungseinrichtungen sind hier ebenfalls in ihrer Gesamtheit mit 28 gekennzeichnet und weisen jeweils einen Strahlfinger 32 auf, der in einem Behältnis eingeführt werden kann. Zu diesem Zweck weist die Vorrichtung Greifelemente 34 auf, welche die Behältnisse, bzw. die Kunststoffvorformlinge greifen, beispielsweise unterhalb ihres Tragrings und nach oben heben, sodass der Strahlfinger 32 in das Innere der Behältnisse eintauchen kann. Weiterhin können die Greifeinrichtungen 34 an einem Träger 36 angeordnet sein, der eine Verschiebung in der Richtung L, die gleichzeitig auch eine Längsrichtung der Kunststoffvorformlinge ist, erlaubt. Das Bezugszeichen 52 bezieht sich auf eine stationär angeordnete Führungskurve, welche das Anheben und Absenken der Kunststoffvorformlinge bzw. der Greifelemente ermöglicht. Auf diese Weise erfolgt damit ein mechanischer Hub der Kunststoffvorformlinge, wobei jedoch zum Durchführen dieses Hubs auch andere Antriebseinrichtungen, wie beispielsweise Servomotoren, hydraulische oder pneumatische Antriebe und dergleichen eingesetzt werden können. Vorteilhaft werden die einzelnen Strahleinrichtungen bzw. Beaufschlagungseinrichtungen 28 luft- bzw. gasgekühlt, wobei diese Kühlung vorteilhaft zum Kühlen für ein Austrittsfenster der Elektronen dient. Nach einer nicht beanspruchten Ausführungsform wäre es auch möglich, die zweite Sterilisationseinrichtung 12 bereits vor der in Figur 1 gezeigten Erwärmungsvorrichtung, das heißt dem Ofen, anzuordnen. Bereits die Zuführ- und Abführsterne 22 und 24 können dabei zum Zwecke der Abschirmung eingehaust sein. Wie erwähnt, können anstelle oder neben den Kunststoffvorformlingen auch die bereits fertig geblasenen Kunststoffbehältnisse durch Beaufschlagung mit Elektronen(strahlung) sterilisiert werden. Weiterhin wäre es möglich, zusätzlich (gegebenenfalls mit einem weiteren Aggregat auch eine Außenbehandlung der Kunststoffvorformlinge oder Kunststoffbehältnisse durch Beaufschlagung mit Elektronen oder allgemeinen Ladungsträgern zu erreichen. Die Sterilisationseinrichtung 12 könnte auch insgesamt in einem Gehäuse angeordnet sein.
Fig. 4 zeigt einen möglichen Ablauf für eine erfindungsgemäße Sterilisation. Hier wird zunächst mithilfe der zweiten Sterilisationseinrichtung 12 eine Reduzierung der Keime um den Faktor 10⁶ erreicht. Anschließend tritt üblicherweise in der Blasmaschine eine Rekontamination auf, welche anschließend durch die weitere keimreduzierte ersten Sterilisationseinrichtung 6 wieder um den Faktor 10⁴ erreicht wird. Schließlich werden die Behältnisse mit der Fülleinrichtung 8 gefüllt. Insgesamt ergibt sich auf diese Weise eine Reduzierung der Keime um den Faktor 10⁷. Nicht berücksichtigt sind in diesen schematischen Darstellungen zusätzliche Einflüsse wie etwa eine Keimeinbringung über die unsterile Luft. Hier wird eine Logstufe abgezogen und so ergibt sich insgesamt eine Keimreduzierung von log 6. Dieser Wert ist jedoch immer noch höher als die Keimreduzierung mithilfe eines klassischen Sterilisators. Der Grund besteht darin, dass in der vorgestellten Erfindung ein physikalisches Verfahren mit hoher Wirksamkeit in einem preisgünstigen Aufbau benutzt wird. Das vorgeschlagene Modul kommt vorteilhaft ohne Reinigungs- und Sterilisationseinbauten aus. Durch den Verzicht auf eine Außenbehandlung mit der zweiten Sterilisationseinrichtung 12 wäre es auch denkbar, die Kosten für eine Abschirmung und auch die Kosten für die einzelnen Strahler zu reduzieren.

## Patentansprüche

1. Verfahren zum Herstellen von mit Flüssigkeiten und insbesondere mit Getränken befüllten Behältnissen, wobei Kunststoffvorformlinge (10) mit einer Erwärmungseinrichtung (16) erwärmt werden, anschließend zu einer Umformungseinrichtung (4) transportiert und von dieser Umformungseinrichtung (4) zu den Kunststoffbehältnissen umgeformt werden und anschließend die Kunststoffbehältnisse (20) zu einer Fülleinrichtung (8) transportiert werden und mit der Flüssigkeit befüllt werden und wobei die Behältnisse wenigstens während des Befüllens innerhalb eines Reinraums (35) transportiert werden und zumindest teilweise vor dem Befüllen mit der Flüssigkeit innerhalb des Reinraums (35) von einer ersten Sterilisationseinrichtung (6) sterilisiert werden, wobei die Kunststoffvorformlinge (10) vor dem Sterilisieren mit der ersten Sterilisationseinrichtung (6) mittels einer zweiten Sterilisationseinrichtung (12) vorsterilisiert werden, **dadurch gekennzeichnet, dass**
die zweite Sterilisationseinrichtung (12) einen bewegbaren Träger (26) aufweist, an dem eine Vielzahl von Beaufschlagungseinrichtungen angeordnet ist, welche zumindest eine Innenwandung der Kunststoffvorformlinge mit Ladungsträgern und/oder einer elektromagnetischen Strahlung beaufschlagen und wobei diese Vorsterilisierung außerhalb des Reinraums (35) vorgenommen wird, und wobei die Vorsterilisierung mit der zweiten Sterilisationseinrichtung (12) nach dem Erwärmen mit der Erwärmungseinrichtung (16) erfolgt.

2. Verfahren nach Anspruch 1,
**dadurch gekennzeichnet, dass**
die Kunststoffbehältnisse (20) mittels der ersten Sterilisationseinrichtung (6) durch Beaufschlagung mit einem Sterilisationsmedium sterilisiert werden.

3. Verfahren nach wenigstens einem der vorangegangenen Ansprüche,
**dadurch gekennzeichnet, dass**
die Kunststoffvorformlinge (10) vor und/oder während des Umformungsvorgangs mit der zweiten Sterilisationseinrichtung (12) vorsterilisiert werden.

4. Vorrichtung (1) zum Herstellen von mit Flüssigkeit befüllten Behältnissen mit einer Erwärmungseinrichtung (16), welche Kunststoffvorformlinge (10) erwärmt, mit einer in einer Transportrichtung der Kunststoffvorformlinge nach der Erwärmungseinrichtung (16) angeordneten Umformungseinrichtung (4), welche Kunststoffvorformlinge (10) zu Kunststoffbehältnissen umformt, mit einer in einer Transportrichtung der Kunststoffbehältnisse nach der Umformungseinrichtung (4) angeordneten Fülleinrichtung (8), welche die Behältnisse mit einer Flüssigkeit befüllt, mit einem Reinraum (35), in dem die Behältnisse behandelt werden und mit einer wenigstens teilweise vor der Fülleinrichtung (8) und innerhalb des Reinraums (35) angeordneten ersten Sterilisationseinrichtung (6), welche die Kunststoffbehältnisse sterilisiert, wobei die Vorrichtung eine zweite Sterilisationseinrichtung (12) aufweist, welche die Kunststoffvorformlinge (10) vorsterilisiert,
**dadurch gekennzeichnet, dass**
die zweite Sterilisationseinrichtung (12) einen bewegbaren Träger (26) aufweist, an dem eine Vielzahl von Beaufschlagungseinrichtungen angeordnet ist, welche zumindest eine Innenwandung der Kunststoffvorformlinge mit Ladungsträgern und/oder einer elektromagnetischen Strahlung beaufschlagen und diese zweite Sterilisationseinrichtung (12) außerhalb des Reinraums (35) angeordnet ist und die zweite Sterilisationseinrichtung (12) in der Transportrichtung der Behältnisse (10, 20) nach der Erwärmungseinrichtung (16) angeordnet ist.

5. Vorrichtung (1) nach Anspruch 4,
**dadurch gekennzeichnet, dass**
die zweite Sterilisationseinrichtung (12) in der Transportrichtung der Behältnisse (10) vor dem Reinraum (35) angeordnet ist.

6. Vorrichtung nach wenigstens einem der vorangegangenen Ansprüche 4 - 5,
**dadurch gekennzeichnet, dass**
die Beaufschlagungseinrichtungen (28) gegenüber den Kunststoffvorformlingen (10) in einer von dem Transportpfad der Kunststoffvorformlinge abweichenden Richtung beweglich sind.

7. Vorrichtung nach wenigstens einem der vorangegangenen Ansprüche 4 - 6,
**dadurch gekennzeichnet, dass**
wenigstens eine Beaufschlagungseinrichtung (28) wenigstens abschnittsweise durch eine Mündung der Kunststoffvorformlinge (10) in diese einführbar ist.

## Claims

1. A method for producing containers filled with liquids, and in particular with beverages, wherein plastics material preforms (10) are heated by a heating device (16), are then conveyed to a shaping device (4) and are shaped by this shaping device (4) to the plastics material containers, and, after that, the plastics material containers (20) are conveyed to a filling device (8) and are filled with the liquid, and wherein the containers are conveyed inside a clean room (35) at least during the filling and are sterilized by a first sterilization device (6) at least in part before the filling with the liquid inside the clean room (35), wherein the plastics material preforms (10) are pre-sterilized by means of a second sterilization device (12) before the sterilization by the first sterilization device (6),
**characterized in that**
the second sterilization device (12) has a movable carrier (26), on which a plurality of stressing devices is arranged which act upon at least an inner wall of the plastics material preforms with charge carriers and/or an electromagnetic radiation and wherein this pre-sterilization is carried out outside the clean room (35) and wherein the pre-sterilization with the second sterilization device is carried out after the heating with the heating device (16).

2. A method according to claim 1,
**characterized in that**
the plastics material containers (20) are sterilized by means of the first sterilization device (6) by being acted upon with a sterilization medium.

3. A method according to at least one of the preceding claims,
**characterized in that**
the plastics material preforms (10) are pre-sterilized with the second sterilization device (12) before and/or during the shaping procedure.

4. An apparatus (1) for producing containers filled with liquid, with a heating device (16) which heats plastics material preforms (10), with a shaping device (4) which is arranged downstream of the heating device (16) in a conveying direction of the plastics material preforms which shapes plastics material preforms (10) into plastics material containers, with a filling device (8) which is arranged downstream of the shaping device (4) in a conveying direction of the plastics material containers and which fills the containers with a liquid, with a clean room (35) in which the containers are treated, and with a first sterilization device (6) which is arranged at least in part upstream of the filling device (8) and inside the clean room (35) and which sterilizes the plastics material containers, wherein the apparatus has a second sterilization device (12) which pre-sterilizes the plastics material preforms (10),
**characterized in that**
the second sterilization device (12) has a movable carrier (26), on which a plurality of stressing devices is arranged which act upon at least an inner wall of the plastics material preforms with charge carriers and/or an electromagnetic radiation and this second sterilization device (12) is situated outside the clean room (35) and the second sterilization device (12) is arranged downstream of the heating device (16) in the conveying direction of the containers (10, 20).

5. An apparatus (1) according to claim 4,
**characterized in that**
the second sterilization device (12) is arranged upstream of the clean room (35) in the conveying direction of the containers (10).

6. An apparatus according to one of the preceding claims 4 - 5,
**characterized in that**
the stressing devices (28) are movable with respect to the plastics material preforms (10) in a direction which deviates from the conveying path of the plastics material preforms.

7. An apparatus according to one of the preceding claims 4 - 6,
**characterized in that**
at least one stressing device (28) is capable of being inserted at least in sections through an aperture of the plastics material preforms (10).

## Revendications

1. Procédé de fabrication de récipients remplis de liquides et en particulier de boissons, dans lequel des ébauches en matière plastique (10) sont chauffées au moyen d'un système de chauffage (16), puis transportées vers un système de mise en forme (4) et mises en forme par ce système de mise en forme (4) de manière à obtenir les récipients en matière plastique, puis les récipients en matière plastique (20) sont transportés vers un système de remplissage (8) et remplis du liquide, et dans lequel les récipients sont transportés au moins pendant le remplissage à l'intérieur d'une salle blanche (35) et stérilisés au moins en partie par un premier système de stérilisation (6) à l'intérieur de la salle blanche (35) avant d'être remplis du liquide, dans lequel les ébauches en matière plastique (10), avant d'être stérilisées au moyen du premier système de stérilisation (6), sont préalablement stérilisées au moyen d'un deuxième système de stérilisation (12), **caractérisé en ce que**
le deuxième système de stérilisation (12) comprend un support mobile (26), sur lequel sont agencés une pluralité de systèmes d'exposition, lesquels exposent au moins une paroi intérieure des ébauches en matière plastique à des porteurs de charge et/ou à un rayonnement électromagnétique et dans lequel cette stérilisation préalable est réalisée à l'extérieur de la salle blanche (35), et dans lequel la stérilisation préalable est réalisée au moyen du deuxième système de stérilisation (12) après le chauffage à l'aide du système de chauffage (16).

2. Procédé selon la revendication 1,
**caractérisé en ce que**
les récipients en matière plastique (20) sont stérilisés au moyen du premier système de stérilisation (6) par exposition à un milieu de stérilisation.

3. Procédé selon au moins l'une des revendications précédentes,
**caractérisé en ce que**
les ébauches en matière plastique (10) sont préalablement stérilisées au moyen du deuxième système de stérilisation (12) avant et/ou pendant la procédure de mise en forme.

4. Dispositif (1) de fabrication de récipients remplis de liquide, comprenant un système de chauffage (16) chauffant les ébauches en matière plastique (10), un système de mise en forme (4) qui est agencé en aval du système de chauffage (16) dans une direction de transport des ébauches en matière plastique et qui met en forme les ébauches en matière plastique (10) de manière à obtenir des récipients en matière plastique, un système de remplissage (8) qui est agencé en aval du système de mise en forme (4) dans une direction de transport des récipients en matière plastique et qui remplit les récipients d'un liquide, une salle blanche (35) dans laquelle les récipients sont traités, et un premier système de stérilisation (6) qui est agencé au moins en partie en amont du système de remplissage (8) et à l'intérieur de la salle blanche (35) et qui stérilise les récipients en matière plastique, dans lequel le dispositif comprend un deuxième système de stérilisation (12), lequel stérilise préalablement les ébauches en matière plastique (10),
**caractérisé en ce que**
le deuxième système de stérilisation (12) comprend un support mobile (26), sur lequel sont agencés une pluralité de systèmes d'exposition, lesquels exposent au moins une paroi intérieure des ébauches en matière plastique à des porteurs de charge et/ou à un rayonnement électromagnétique, et ce deuxième système de stérilisation (12) est agencé à l'extérieur de la salle blanche (35) et le deuxième système de stérilisation (12) est agencé en aval du système de chauffage (16) dans la direction de transport des récipients (10, 20).

5. Dispositif (1) selon la revendication 4,
**caractérisé en ce que**
le deuxième système de stérilisation (12) est agencé en amont de la salle blanche (35) dans la direction de transport des récipients (10).

6. Dispositif selon au moins l'une des revendications précédentes 4 à 5,
**caractérisé en ce que**
les systèmes d'exposition (28) sont mobiles par rapport aux ébauches en matière plastique (10) dans une direction différente du trajet de transport des ébauches en matière plastique.

7. Dispositif selon au moins l'une des revendications précédentes 4 à 6,
**caractérisé en ce que**
au moins un système d'exposition (28) est introduit au moins en partie dans les ébauches en matière plastique (10) par une ouverture de ces dernières.
